# EUROPEAN PATENT SPECIFICATION

(11) **EP 4 531 354 B1**
(45) Date of publication and mention of the grant of the patent: **08.07.2026**
(21) Application number: 22944108.4
(22) Date of filing: 30.05.2022
(51) Int. Cl.: G06F 9/455, H04L 27/00, G06F 9/54

(54) **DATA TRANSMISSION METHOD AND VIRTUALIZATION SYSTEM**
DATENÜBERTRAGUNGSVERFAHREN UND VIRTUALISIERUNGSSYSTEM
PROCÉDÉ DE TRANSMISSION DE DONNÉES ET SYSTÈME DE VIRTUALISATION

(43) Date of publication of application: 02.04.2025
(73) Proprietor: Yinwang Intelligent Technologies Co., Ltd., Shenzhen, Guangdong 518110 (CN)
(72) Inventor: CAO, Jianlong, Shenzhen, Guangdong 518129 (CN); ZHAO, Kang, Shenzhen, Guangdong 518129 (CN); ZHENG, Peiqun, Shenzhen, Guangdong 518129 (CN); TAO, Zhe, Shenzhen, Guangdong 518129 (CN)
(74) Representative: MERH-IP Matias Erny Reichl Hoffmann Patentanwälte PartG mbB
(86) International application number: PCT/CN2022/095994
(87) International publication number: WO 2023/230766

(56) References cited:
- EP-A1- 2 985 718
- WO-A1-2018/120986
- CN-A- 104 123 233
- CN-A- 111 679 921
- CN-A- 111 988 230
- CN-A- 112 052 100

## Description

### TECHNICAL FIELD

This application relates to the field of virtualization technologies, and in particular, to a data transmission method and a virtualization system.

### BACKGROUND

A virtualization technology in a vehicle-mounted scenario supports carrying heterogeneous operating systems on a same hardware platform, to implement integration and computing power sharing of vehicle-mounted computing units. The virtualization technology in the vehicle-mounted scenario mainly includes computing resource virtualization and input/output (input/output, I/O) virtualization. The I/O virtualization may generally include network device virtualization. The network device virtualization (for example, network interface card virtualization) is an important basic part for communication between a plurality of virtual machines (virtual machines, VMs). As topology complexity and a bandwidth of a vehicle-mounted interconnect network increase, a ratio of physical computing resources consumed in the network device virtualization is increasingly high.

Currently, a virtio technology of semi-I/O virtualization is usually used during specific implementation of the network device virtualization. The technology uses a zero-copy (zero-copy) design idea. Specifically, a data packet is shared with a single virtual machine by using a shared memory between a host and a virtual machine, so that the host can directly access a memory of the virtual machine, and no additional memory copy operation is required, providing good performance.

However, the virtio technology supports only one-to-one communication, that is, supports cache sharing only between a host and a single virtual machine. In a receiving scenario of a broadcast data packet corresponding to N (N is an integer greater than 1) virtual machines, the broadcast data packet needs to be copied N times from a cache of the host to a shared cache corresponding to each virtual machine. As a result, high computing resource overheads are generated.
EP2985718A1 discloses a target virtual machine accessing to a shared memory segment, which includes memory pages of a source virtual machine or shared memory established by the virtual machine monitor, VMM, by switching to a secure view extended page table, EPT.
CN111988230A discloses that a source virtual machine deposits a target packet into the shared memory, and any one of a plurality of target virtual machines reads the target packet from the shared memory upon monitoring the deposit of the target packet in the shared memory.

### SUMMARY

The present invention is defined by the independent claims. In the following, parts of the description and drawings referring to examples which do not necessarily comprise all features of the invention as currently claimed are not represented as embodiments of the invention but as examples useful for understanding the embodiments of the invention. Embodiments of this application provides a data transmission method and a virtualization system, to reduce overheads of receiving multicast data or broadcast data.

To achieve the foregoing objective, the following technical solutions are used in this application.

According to a first aspect, a data transmission method is provided. The data transmission method is applied to a virtualization system. The virtualization system includes a first virtual machine and a plurality of second virtual machines. The first virtual machine includes a shared memory that is allowed to be accessed by at least two second virtual machines. The method includes: The first virtual machine receives data, where the data is sent to the at least two second virtual machines, for example, the data is broadcast data or multicast data; when the data does not exist in the shared memory, the first virtual machine stores the data in the shared memory; and the first virtual machine sends a storage address of the data in the shared memory to any second virtual machine of the at least two second virtual machines, so that the at least two second virtual machines may access the shared memory to obtain the data.

In the foregoing technical solution, when receiving the data sent to the at least two second virtual machines, if the data does not exist in the shared memory, the first virtual machine stores the data in the shared memory, and sends the storage address of the data in the shared memory to the at least two second virtual machines, so that the at least two second virtual machines may access the shared memory to obtain the data. In this process, the first virtual machine can only copy once (that is, store the data in the shared memory) to implement receiving of the data by the at least two second virtual machines. That is, in this method, the multicast data and the broadcast data can be received through copying only performed once, thereby greatly reducing computing resource overheads.

In a possible implementation of the first aspect, the method further includes: When the data exists in the shared memory, the first virtual machine sends the storage address of the data in the shared memory to the second virtual machine. In the foregoing possible implementation, if the data exists in the shared memory, the first virtual machine may directly send the storage address of the data in the shared memory, so that the second virtual machine may access the shared memory to obtain the data. In this way, overheads of receiving the data by the second virtual machine are reduced, to reduce the computing resource overheads.

In a possible implementation of the first aspect, a total quantity of copy times of receiving the data by the at least two second virtual machines is 1. In the foregoing possible implementation, the first virtual machine can only copy once to implement the receiving of the data by the at least two second virtual machines, thereby greatly reducing the computing resource overheads.

In a possible implementation of the first aspect, after the first virtual machine receives the data, the method further includes: The first virtual machine determines check information of the data; and if the check information already exists in the shared memory, the first virtual machine determines that the data exists in the shared memory; or if the check information does not exist in the shared memory, the first virtual machine determines that the data does not exist in the shared memory. In the foregoing possible implementation, the first virtual machine may determine, by using the check information of the data, whether the data exists in the shared memory.

In a possible implementation of the first aspect, the virtualization system further includes a one-to-many shared queue, and the first virtual machine and the at least two second virtual machines may interact with each other by using the one-to-many shared queue. Correspondingly, that the first virtual machine sends a storage address of the data in the shared memory to the second virtual machine includes: the first virtual machine sends the storage address to the second virtual machine by using the one-to-many shared queue. In the foregoing possible implementation, the first virtual machine may send the storage address of the data in the shared memory to the at least two second virtual machines by using the one-to-many shared queue, so that the at least two second virtual machines may access the shared memory to obtain the data.

In a possible implementation of the first aspect, the first virtual machine further includes a virtual network interface card. Before the first virtual machine receives the data, the method further includes: The first virtual machine binds the virtual network interface card to the one-to-many shared queue; and correspondingly, that the first virtual machine receives data includes: The first virtual machine receives the data by using the virtual network interface card. In the foregoing possible implementation, the first virtual machine binds the virtual network interface card to the one-to-many shared queue, so that data-related information subsequently received by the virtual network interface card may be sent to the second virtual machine by using the one-to-many shared queue.

In a possible implementation of the first aspect, there are at least two virtual network interface cards, the at least two virtual network interface cards are in a one-to-one correspondence with the at least two second virtual machines, and the virtualization system further includes a virtual machine manager. The method further includes: The first virtual machine sends a registration request to the virtual machine manager, where the registration request is used to register any virtual network interface card of the at least two virtual network interface cards; and when the virtual machine manager receives the registration request, if the second virtual machine corresponding to the virtual network interface card is not mapped to the shared memory, the virtual machine manager establishes a mapping between the second virtual machine and the shared memory. In the foregoing possible implementation, the virtual machine manager may enable, by performing operations of mapping the second virtual machine to the shared memory and demapping the second virtual machine from the shared memory, the plurality of second virtual machines in the virtualization system to flexibly access the same shared memory.

In a possible implementation of the first aspect, the method further includes: The first virtual machine sends a deletion request to the virtual machine manager, where the deletion request is used to deregister the virtual network interface card; and when the virtual machine manager receives the deletion request, if the second virtual machine corresponding to the virtual network interface card does not use the shared memory, the virtual machine manager removes the mapping between the second virtual machine and the shared memory. In the foregoing possible implementation, when a second virtual machine does not use the shared memory, the virtual machine manager may demap the second virtual machine from the shared memory. In this way, unauthorized access performed by the second virtual machine to the shared memory can be avoided, thereby ensuring data receiving security.

According to a second aspect, a data transmission apparatus is provided. The apparatus may be applied to a virtualization system as a first virtual machine. The virtualization system further includes a plurality of second virtual machines and a shared memory that is allowed to be accessed by at least two second virtual machines of the plurality of second virtual machines. The apparatus includes: a receiving unit, configured to receive data, where the data is sent to the at least two second virtual machines; a processing unit, configured to: when the data does not exist in the shared memory, store data information of the data in the shared memory; and a sending unit, configured to: send a storage address of the data in the shared memory to any second virtual machine of the at least two second virtual machines. Optionally, the data is broadcast data; or the data is multicast data.

In a possible implementation of the second aspect, the sending unit is further configured to: when the data exists in the shared memory, send the storage address of the data in the shared memory to the second virtual machine.

In a possible implementation of the second aspect, a total quantity of copy times of receiving the data by the at least two second virtual machines is 1.

In a possible implementation of the second aspect, the data information further includes check information of the data. The processing unit is further configured to: determine the check information of the data; and if the check information already exists in the shared memory, determine that the data exists in the shared memory; or if the check information does not exist in the shared memory, determine that the data does not exist in the shared memory.

In a possible implementation of the second aspect, the virtualization system further includes a one-to-many shared queue. The sending unit is further configured to send the storage address to the second virtual machine by using the one-to-many shared queue.

In a possible implementation of the second aspect, the first virtual machine further includes a virtual network interface card. Before the first virtual machine receives the data, the processing unit is further configured to bind the virtual network interface card to the one-to-many shared queue; and correspondingly, the receiving unit is further configured to receive the data by using the virtual network interface card.

In a possible implementation of the second aspect, there are at least two virtual network interface cards, the at least two virtual network interface cards are in a one-to-one correspondence with the at least two second virtual machines, and the virtualization system further includes a virtual machine manager. The sending unit is further configured to: send a registration request to the virtual machine manager, where the registration request is used to register any virtual network interface card of the at least two virtual network interface cards, so that when receiving the registration request, if the second virtual machine corresponding to the virtual network interface card is not mapped to the shared memory, the virtual machine manager establishes a mapping between the second virtual machine and the shared memory.

In a possible implementation of the second aspect, the sending unit is further configured to send a deletion request to the virtual machine manager, and the deletion request is used to deregister the virtual network interface card, so that when receiving the deletion request, if the second virtual machine corresponding to the virtual network interface card does not use the shared memory, the virtual machine manager removes the mapping between the second virtual machine and the shared memory.

According to a third aspect, a virtualization system is provided. The virtualization system includes a first virtual machine and a plurality of second virtual machines, and the first virtual machine includes a shared memory that is allowed to be accessed by at least two second virtual machines of the plurality of second virtual machines. The first virtual machine is configured to receive data, and the data is sent to the at least two second virtual machines. The first virtual machine is further configured to: when the data does not exist in the shared memory, store the data in the shared memory. The first virtual machine is further configured to: send a storage address of the data in the shared memory to any second virtual machine of the at least two second virtual machines. Optionally, the data is broadcast data; or the data is multicast data.

In a possible implementation of the third aspect, the first virtual machine is further configured to: when the data exists in the shared memory, send the storage address of the data in the shared memory to the second virtual machine.

In a possible implementation of the third aspect, a total quantity of copy times of receiving the data by the at least two second virtual machines is 1.

In a possible implementation of the third aspect, the data information further includes check information of the data. The first virtual machine is further configured to: determine the check information of the data; and if the check information already exists in the shared memory, determine that the data exists in the shared memory; or if the check information does not exist in the shared memory, determine that the data does not exist in the shared memory.

In a possible implementation of the third aspect, the virtualization system further includes a one-to-many shared queue. The first virtual machine is further configured to send the storage address to the second virtual machine by using the one-to-many shared queue.

In a possible implementation of the third aspect, the first virtual machine further includes a virtual network interface card. Before the first virtual machine receives the data, the first virtual machine is further configured to bind the virtual network interface card to the one-to-many shared queue; and correspondingly, the first virtual machine is further configured to receive the data by using the virtual network interface card.

In a possible implementation of the third aspect, there are at least two virtual network interface cards, the at least two virtual network interface cards are in a one-to-one correspondence with the at least two second virtual machines, and the virtualization system further includes a virtual machine manager. The first virtual machine is further configured to: send a registration request to the virtual machine manager, where the registration request is used to register any virtual network interface card of the at least two virtual network interface cards. The virtual machine manager is configured to: when receiving the registration request, if the second virtual machine corresponding to the virtual network interface card is not mapped to the shared memory, establish a mapping between the second virtual machine and the shared memory.

In a possible implementation of the third aspect, the first virtual machine is further configured to send a deletion request to the virtual machine manager, and the deletion request is used to deregister the virtual network interface card. The virtual machine manager is configured to: when receiving the deletion request, if the second virtual machine corresponding to the virtual network interface card does not use the shared memory, remove the mapping between the second virtual machine and the shared memory.

According to another aspect of this application, a communication device is further provided. The communication device includes a hardware layer, and a virtualization system running at the hardware layer. The virtualization system is the virtualization system according to any one of the third aspect and the possible implementations of the third aspect. Optionally, the hardware layer includes a processor, a memory, and a network interface card.

According to another aspect of this application, a computer-readable storage medium is provided. The computer-readable storage medium stores a computer program or instructions. When the computer program or the instructions are run, the data transmission method according to any one of the first aspect and the possible implementations of the first aspect is implemented.

According to another aspect of this application, a computer program product is further provided. The computer program product includes a computer program or instructions. When the computer program or the instructions are run by a device, the device is enabled to implement the data transmission method according to any one of the foregoing aspects.

It may be understood that the data transmission apparatus, the virtualization system, the communication device, the computer-readable storage medium, and the computer program product provided in the foregoing aspects all include the content described in the data transmission method. Therefore, for beneficial effect that can be achieved by the data transmission apparatus, the virtualization system, the communication device, the computer-readable storage medium, and the computer program product, refer to the beneficial effect of the foregoing data transmission method. Details are not described herein again.

### BRIEF DESCRIPTION OF DRAWINGS

FIG. 1 is a diagram of a virtio-net architecture according to an embodiment of this application;
FIG. 2 is a diagram of a vhost-net architecture according to an embodiment of this application;
FIG. 3 is a diagram of a structure of a virtualization system according to an embodiment of this application;
FIG. 4 is a diagram of a structure of another virtualization system according to an embodiment of this application;
FIG. 5 is a schematic flowchart of a data transmission method according to an embodiment of this application;
FIG. 6 is a diagram of data transmission in a virtualization system according to an embodiment of this application;
FIG. 7 is a schematic flowchart of binding a virtual network interface card to a one-to-many shared queue according to an embodiment of this application;
FIG. 8 is a schematic flowchart of mapping a second virtual machine to a shared memory according to an embodiment of this application;
FIG. 9 is a schematic flowchart of demapping a second virtual machine from a shared memory according to an embodiment of this application;
FIG. 10 is a diagram of a structure of a data transmission apparatus according to an embodiment of this application; and
FIG. 11 is a diagram of a structure of a communication device according to an embodiment of this application.

### DESCRIPTION OF EMBODIMENTS

The following describes embodiments of this application with reference to accompanying drawings in embodiments of this application.

In this application, "at least one" means one or more, and "a plurality of" and "at least two" mean two or more. A term "and/or" describes an association relationship between associated objects, and indicates that three relationships may exist. For example, A and/or B may indicate the following cases: Only A exists, both A and B exist, and only B exists, where A and B each may be singular or plural. "At least one of the following items (pieces)" or a similar expression thereof indicates any combination of these items, including a single item (piece) or any combination of a plurality of items (pieces). For example, at least one item (piece) of a, b, or c may indicate: a, b, c, a and b, a and c, b and c, or a, b and c, where a, b, and c each may be singular or plural. In addition, in embodiments of this application, terms such as "first" and "second" are used to distinguish objects with similar names, functions, or effect. A person skilled in the art may understand that the terms such as "first" and "second" are not intended to limit a quantity and an execution sequence.

In this application, a term such as "example" or "for example" indicates giving an example, an illustration, or a description. Any embodiment or design scheme described as an "example" or "for example" in this application should not be explained as being more preferred or having more advantages than another embodiment or design scheme. Exactly, use of the term "example", "for example", or the like is intended to present a related concept in a specific manner.

Before embodiments of this application are described, related content of a virtualization technology in this application is first described.

The virtualization technology is a resource management technology, may abstract and convert, for presentation, various hardware resources of a computer, such as a central processing unit (central processing unit, CPU), a memory (memory), a network interface card (network interface card, NIC) (which may also be referred to as a network interface card), and various storages such as a hard disk (disk) and a magnetic disk, to break an inseparable obstacle between hardware structures, so that a user can use these hardware resources in a better manner than an original configuration. Virtualization functions of these hardware resources are not limited by a setting manner, a location, or a physical configuration of an existing resource.

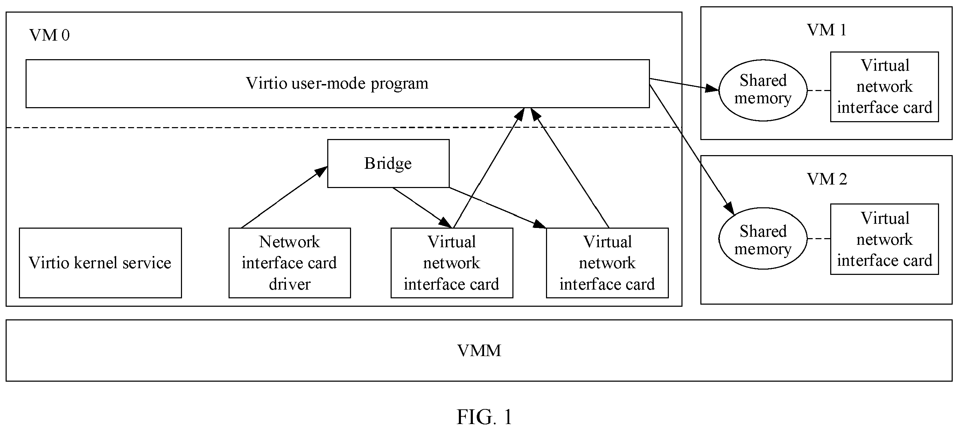

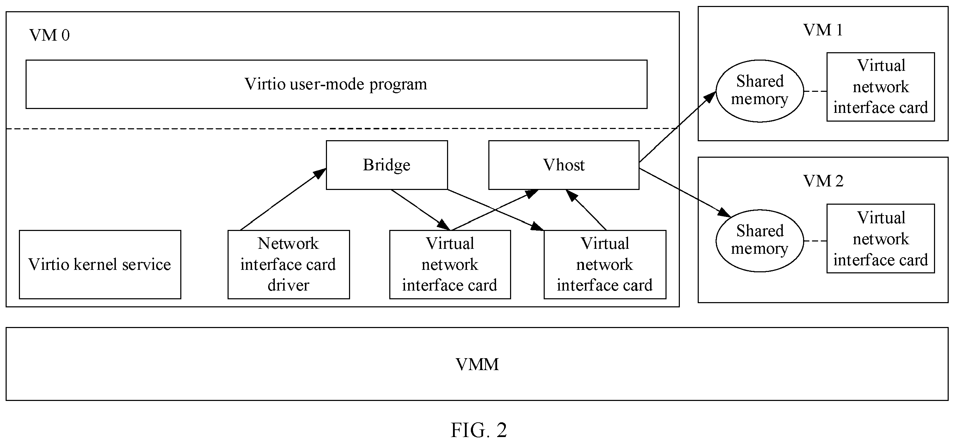

The virtualization technology mainly includes computing resource virtualization and input/output (input/output, I/O) virtualization. The I/O virtualization may include network device virtualization. A virtual input/output (virtual input/output, virtio) technology of semi-I/O virtualization is generally used during specific implementation of the network device virtualization. Virtio is a set of general I/O device virtualization programs, and is an abstraction of a group of general I/O devices in a para-virtualization virtual machine manager. The virtio provides a set of communication frameworks and programming interfaces between upper-layer applications and virtualization devices of the virtual machine manager. This reduces a compatibility problem caused by cross-platform and greatly improves driver program development efficiency. Currently, a virtio architecture may include two types: virtio-net and vhost-net. The following uses an example in which the virtualization I/O device is a virtual network interface card to describe the two architectures by using the architectures shown in FIG. 1 and FIG. 2.

As shown in FIG. 1, the virtio-net architecture includes a service virtual machine VM 0 and a plurality of guest virtual machines VM 1 to VM n, where n is a positive integer. The service virtual machine VM 0 includes a virtio user-mode program, and a plurality of virtual network interface cards, a virtio kernel service, a bridge, and a network interface card driver that are located in a kernel. Each virtual network interface card may correspond to one guest virtual machine. Each guest virtual machine of the plurality of guest virtual machines VM 1 to VM n may include a shared memory and a virtual network interface card, and the virtio user-mode program in the service virtual machine VM 0 may access shared memories of different guest virtual machines. In the service virtual machine VM 0, the bridge is configured to connect the network interface card driver and the plurality of virtual network interface cards, and allocate, to a corresponding virtual network interface card, a data packet that is received by the network interface card driver from a network. The virtio user-mode program may obtain the data packet from the plurality of virtual network interface cards, and when the data packet is a data packet of a guest virtual machine, store the data packet in corresponding shared content of the guest virtual machine. In FIG. 1, an example in which the plurality of guest virtual machines VM 1 to VM n include two guest virtual machines that are represented as a VM 1 and a VM 2, and the service virtual machine VM 0 includes two virtual network interface cards is used for description.

As shown in FIG. 2, the vhost-net architecture includes a service virtual machine VM 0 and a plurality of guest virtual machines VM 1 to VM n. The service virtual machine VM 0 includes a virtio user-mode program, and a virtio kernel service, a bridge, a network interface card driver, a plurality of virtual network interface cards, and a kernel data plane vhost that are located in a kernel. Each virtual network interface card of the plurality of virtual network interface cards may correspond to one guest virtual machine. Each guest virtual machine of the plurality of guest virtual machines VM 1 to VM n may include a shared memory and a virtual network interface card, and the kernel data plane vhost in the service virtual machine VM 0 may access shared memories of different guest virtual machines. In the service virtual machine VM 0, the bridge is configured to connect the network interface card driver and the plurality of virtual network interface cards, and allocate, to a corresponding virtual network interface card, a data packet that is received by the network interface card driver from a network. The kernel data plane vhost may obtain the data packet from the plurality of virtual network interface cards, and when the data packet is a data packet of a guest virtual machine, store the data packet in a corresponding shared memory of the guest virtual machine. In FIG. 2, an example in which the plurality of guest virtual machines VM 1 to VM n include two guest virtual machines that are represented as a VM 1 and a VM 2, and the service virtual machine VM 0 includes two virtual network interface cards is used for description.

A difference between the virtio-net architecture and the vhost-net architecture lies in that: In the virtio-net architecture, the virtio user-mode program in the service virtual machine executes data packet copying. Consequently, the service virtual machine needs to frequently switch between a user mode and a kernel mode in a data packet transmission process, resulting in a low data throughput. Compared with the virtio-net architecture, the vhost-net architecture migrates data plane processing from a user mode to a kernel mode, and the kernel data plane vhost added to the service virtual machine executes data packet copying. In this way, switching between the kernel mode and the user mode is avoided, thereby improving a data throughput.

In addition, during data transmission, the virtio-net architecture and the vhost-net architecture support only one-to-one communication, that is, support only data transmission that is between the service virtual machine and a single guest virtual machine and that is performed by using a shared memory. When there are a plurality of guest virtual machines, one shared memory needs to be allocated to each guest virtual machine of the plurality of guest virtual machines, to implement data transmission between the service virtual machine and different guest virtual machines by using different shared memories. When a data packet (for example, the data packet is a multicast data packet or a broadcast data packet) whose receive end is N (N is an integer greater than 1) guest virtual machines is transmitted in this manner, when receiving the data packet, the service virtual machine needs to separately copy the data packet from a cache of the service virtual machine to a shared memory of each guest virtual machine of the N guest virtual machines, that is, the service virtual machine needs to copy N times to implement receiving of the data packet by the N guest virtual machines. Consequently, high computing resource overheads are generated.

Based on this, technical solutions of embodiments of this application provide a data transmission method applied to a virtualization system. The virtualization system includes a first virtual machine and a plurality of second virtual machines. The first virtual machine includes a shared memory that is allowed to be accessed by the plurality of second virtual machines. When the first virtual machine receives data (for example, a broadcast data packet or a multicast data packet) whose receive end is the plurality of second virtual machines, the first virtual machine may store the data in the shared memory, and send a corresponding storage address to the plurality of second virtual machines. A difference between the method and the solution of transmitting the data packet based on the foregoing virtio-net architecture and the foregoing vhost-net architecture lies in that: In the method, the service virtual machine can only copy once to implement receiving of the data packet by the plurality of guest virtual machines, thereby greatly reducing computing resource overheads. The following describes the technical solutions in embodiments of this application in detail.

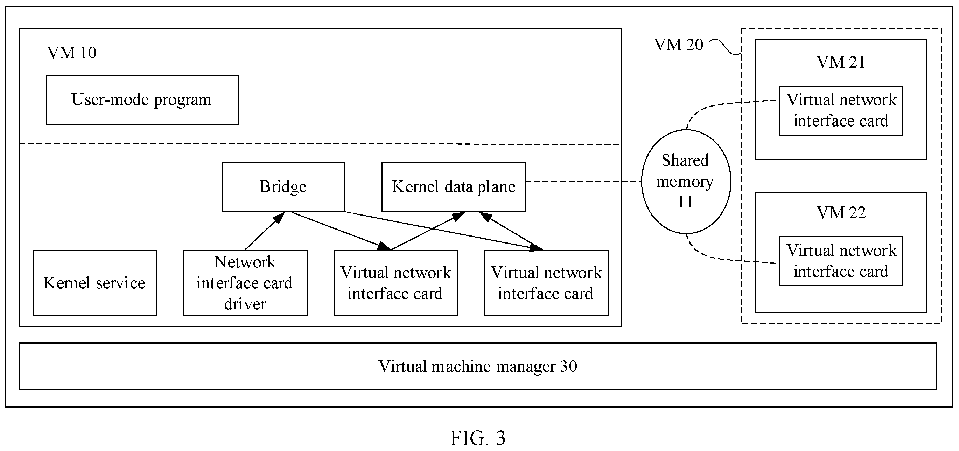

FIG. 3 is a diagram of a structure of a virtualization system according to an embodiment of this application. The virtualization system may be a virtio-based virtualization system. The virtualization system may be applied to an application scenario in which a plurality of virtual machines receive same data. For example, the application scenario may be a multimedia application scenario in a vehicle-mounted application scenario, a scenario of a scalable service-oriented middleware over internet protocol (internet protocol, IP) (scalable service-oriented middleware over IP, SOME/IP) service discovery (service discovery, SD) protocol, or the like. The virtualization system includes a first virtual machine VM 10 and a plurality of second virtual machines VMs 20. The first virtual machine VM 10 includes a shared memory 11, and the plurality of second virtual machines VMs 20 may be allowed to access the shared memory 11. The first virtual machine VM 10 may provide a virtualization I/O device for the plurality of second virtual machines VMs 20, and perform data transmission with some or all of the plurality of second virtual machines VMs 20 by using the shared memory 11. In FIG. 3, an example in which the plurality of second virtual machines VMs 20 include two second virtual machines that are respectively represented as a VM 21 and a VM 22 is used for description. Optionally, the first virtual machine may also be referred to as a service virtual machine, and the second virtual machine may also be referred to as a guest virtual machine.

In addition to the shared memory 11, the first virtual machine VM 10 may further include a user-mode program (for example, a virtio user-mode program) in a user mode, and a kernel service (for example, a virtio kernel service), a bridge, a kernel data plane, a virtualization I/O device, a driver corresponding to the virtualization I/O device, and the like that are in a kernel mode. The virtualization I/O device and the driver are connected to the bridge, and the virtualization I/O device is further connected to the kernel data plane. The kernel data plane may also be referred to as a vhost. Each second virtual machine of the plurality of second virtual machines VMs 20 may include a virtualization I/O device. The virtualization I/O device includes but is not limited to a virtual network interface card, a virtual display device, a virtual input device, and the like. In FIG. 3, an example in which the virtualization I/O device includes a virtual network interface card, the first virtual machine VM 10 includes two virtual network interface cards, and a corresponding driver is a network interface card driver is used for description.

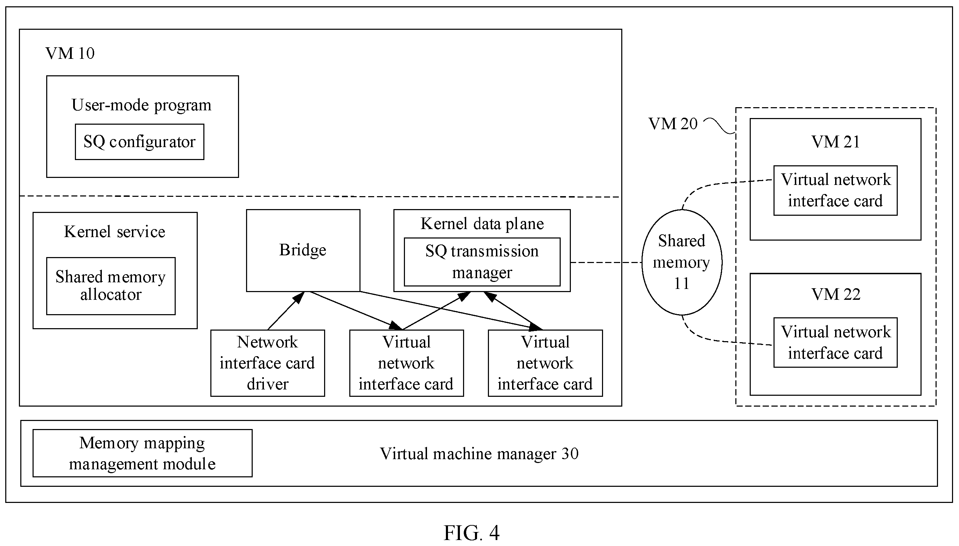

Optionally, as shown in FIG. 4, the kernel service may include a shared memory allocator, and the shared memory allocator may be configured to allocate the shared memory 11. For example, the shared memory allocator may be configured to allocate a size of the shared memory 11, an address corresponding to the shared memory 11, or the like. This is not specifically limited in this embodiment of this application.

Further, the virtualization system may further include a one-to-many shared queue (shared queue, SQ), and the one-to-many shared queue may be used to implement interaction between the first virtual machine VM 10 and the plurality of second virtual machines VMs 20. For example, the first virtual machine VM 10 may send information to any second virtual machine of the plurality of second virtual machines VMs 20 by using the one-to-many shared queue. For example, the information may be a storage address of data in the shared memory 11, each second virtual machine may receive information from the first virtual machine VM 10 or send information to the first virtual machine VM 10 by using the one-to-many shared queue. The one-to-many shared queue is not shown in the figure.

Optionally, the one-to-many shared queue may be created by the first virtual machine VM 10. Specifically, the virtio user-mode program may determine, based on a user configuration parameter, whether the one-to-many shared queue needs to be created. For example, as shown in FIG. 4, the virtio user-mode program may include a shared queue configurator, and the shared queue configurator may be configured to configure whether the one-to-many shared queue needs to be created. In FIG. 4, the shared queue configurator is represented as an SQ configurator.

In a possible embodiment, when creating the virtual network interface cards for the plurality of second virtual machines VMs 20, the first virtual machine VM 10 may create the one-to-many shared queue, and bind the virtual network interface cards to the one-to-many shared queue, so that the first virtual machine VM 10 may send, by using the one-to-many shared queue, related information of data received by the virtual network interface cards to different second virtual machines of the plurality of second virtual machines VMs 20. Specifically, the virtual network interface card may be specifically created by the virtio user-mode program in the first virtual machine VM 10. When creating the virtual network interface card, the virtio user-mode program creates the one-to-many shared queue. Optionally, as shown in FIG. 4, the kernel data plane of the first virtual machine VM 10 may include a shared queue transmission manager. The shared queue transmission manager may be responsible for managing transmission of the one-to-many shared queue. In FIG. 4, the shared queue transmission manager is represented as an SQ transmission manager. In some other possible embodiments, when creating the virtual network interface card, the first virtual machine VM 10 may further create one or more one-to-one shared queues for the second virtual machine in addition to creating the one-to-many shared queue. Each one-to-one shared queue may be used to implement data transmission between the first virtual machine VM 10 and a single second virtual machine.

Further, the virtualization system may further include a virtual machine manager 30. During actual application, the virtual machine manager 30 may be a virtual machine monitor (virtual machine monitor, VMM), a hypervisor (hypervisor), or the like. As a management layer, the virtual machine manager 30 may be configured to: complete management and allocation of hardware resources; present one virtual hardware platform for a plurality of virtual machines; and perform scheduling and isolation of the plurality of virtual machines. Optionally, as shown in FIG. 4, the virtual machine manager 30 may include a memory mapping module. The memory mapping module may be configured to implement mapping between the plurality of second virtual machines VMs 20 and the same shared memory, that is, allow the plurality of second virtual machines to access the same shared memory.

In addition, the virtualization system may be a software layer running on a hardware layer. The hardware layer may include a plurality of hardware resources such as a processor, a memory, a magnetic disk (disk), a network interface card, and a peripheral. For example, the processor may be a central processing unit (central processing unit, CPU), an artificial intelligence (artificial intelligence, AI) processor, a network processor, and/or the like. The memory may include a random access memory, a read-only memory, and/or the like. The peripheral is an abbreviation of an external device, and may include an input device, a display device, a print device, and/or the like.

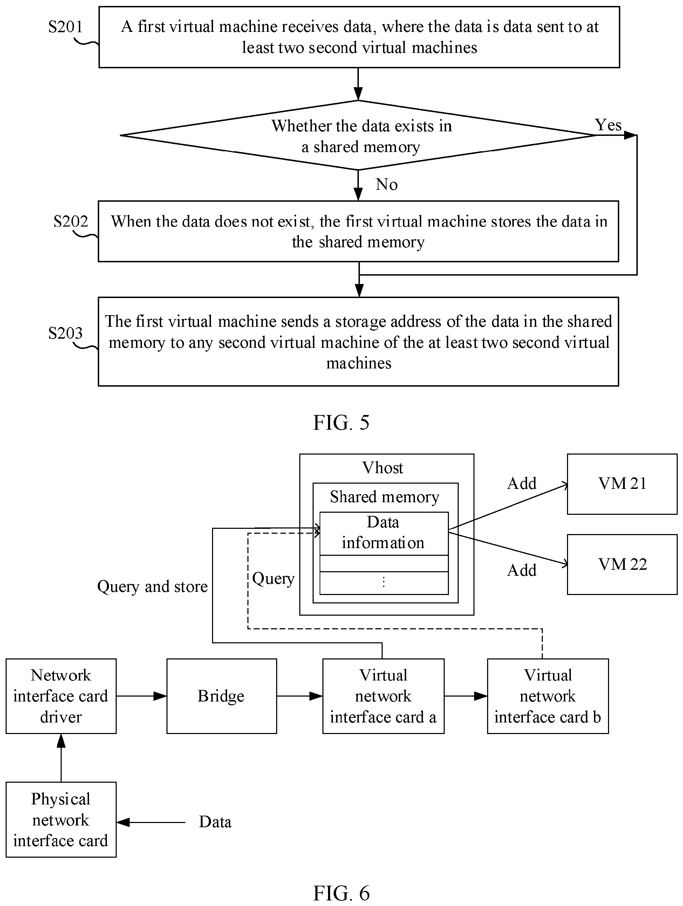

FIG. 5 is a schematic flowchart of a data transmission method according to an embodiment of this application. The method may be applied to the virtualization system shown in FIG. 3 or FIG. 4. The method includes the following several steps.

S201: A first virtual machine receives data, where the data is data sent to at least two second virtual machines.

The data may be multicast data, or may be broadcast data. When the data is the multicast data, the at least two second virtual machines are some second virtual machines of all second virtual machines in the virtualization system. When the data is the broadcast data, the at least two second virtual machines are all second virtual machines in the virtualization system. Optionally, the data may be a data packet. Therefore, the multicast data may be a multicast data packet, and the broadcast data may be a broadcast data packet.

Specifically, when the first virtual machine receives the data, the first virtual machine may parse the data to obtain destination information of the data, to determine, based on the destination information, related information of a second virtual machine receiving the data. For example, the related information may include a quantity of second virtual machines receiving the data, an identifier or an address of the second virtual machine receiving the data, and/or the like. Further, the first virtual machine may determine, based on the related information of the second virtual machine receiving the data, whether the data is data sent to one second virtual machine or data sent to at least two second virtual machines.

Optionally, the first virtual machine may parse the data to further obtain attribute information of the data. The attribute information may indicate that the data is unicast data, multicast data, or broadcast data. For example, the attribute information of the data may be 2 bits (2 bits), where that a value of the 2 bits is 00 indicates the unicast data, that a value of the 2 bits is 01 indicates the multicast data, and that a value of the 2 bits is 10 indicates the multicast data.

In a possible embodiment, that the first virtual machine receives the data may mean that a virtual network interface card in the first virtual machine receives the data. For example, as shown in FIG. 6, the data is initially received by a physical network interface card at a hardware layer running the virtualization system. After receiving the data, the physical network interface card may transmit the data to a network interface card driver in the first virtual machine. The network interface card driver transmits the data to a bridge. The bridge may allocate the data to the virtual network interface card in the first virtual machine, so that the virtual network interface card in the first virtual machine receives the data.

S202: When the data does not exist in a shared memory, the first virtual machine stores the data in the shared memory.

The shared memory is a shared memory of the first virtual machine, and the at least two second virtual machines may access the shared memory. Optionally, the first virtual machine stores data information of the data in the shared memory. The data information of the data may be information related to the data, and the data information may include the data, check information of the data, an identifier of the data (for example, an identifier of a data packet), or the like. Optionally, the data information further includes information such as a storage address of the data in the shared memory. Further, the data information may further include one or more of the following information: an amount of the data, a quantity and identifiers of the at least two second virtual machines receiving the data, and the like. This is not specifically limited in this embodiment of this application.

Specifically, when the first virtual machine receives the data, and the data is data (the data may alternatively be replaced with multicast data or broadcast data) sent to at least two clients, the first virtual machine may query the shared memory, to determine whether the data exists in the shared memory. If the data exists in the shared memory, that is, the data is already stored in the shared memory, the first virtual machine may perform the following step S203. If the data does not exist in the shared memory, that is, the data is not stored in the shared memory, the first virtual machine may store the data information of the data in the shared memory, and obtain a storage address of the data information in the shared memory. This may be specifically performed by a vhost in the first virtual machine.

For example, as shown in FIG. 6, when the first virtual machine receives the data by using a virtual network interface card a, and the data does not exist in the shared memory, the vhost in the first virtual machine stores the data in the shared memory. When the first virtual machine receives the data by using a virtual network interface card b, and the data already exists in the shared memory, the vhost in the first virtual machine does not need to store the data in the shared memory.

In a possible embodiment, when the data information includes the identifier of the data, that the first virtual machine determines whether the data exists in the shared memory includes: The first virtual machine determines whether the identifier of the data exists in the shared memory; and if the identifier exists in the shared memory, the first virtual machine determines that the data exists in the shared memory; or if the identifier does not exist in the shared memory, the first virtual machine determines that the data does not exist in the shared memory.

In another possible embodiment, when the data information includes the check information of the data, that the first virtual machine determines whether the data exists in the shared memory includes: The first virtual machine determines whether the check information of the data exists in the shared memory; and if the check information exists in the shared memory, the first virtual machine determines that the data exists in the shared memory; or if the check information does not exist in the shared memory, the first virtual machine determines that the data does not exist in the shared memory. Optionally, the check information may be a checksum. The checksum may be used to check whether the data is correctly received. The checksum may be obtained through calculation performed by the first virtual machine on the data according to a specific check algorithm. This is not specifically limited in this embodiment of this application.

S203: The first virtual machine sends the storage address of the data in the shared memory to any second virtual machine of the at least two second virtual machines.

After the data is already stored in the shared memory or the first virtual machine stores the data in the shared memory, the server virtual machine may send the storage address of the data information in the shared memory to each second virtual machine of the at least two second virtual machines. When any second virtual machine of the at least two second virtual machines receives the storage address, the second virtual machine may access the shared memory based on the storage address to obtain the data stored in the shared memory. For example, as shown in FIG. 6, the at least two second virtual machines include a VM 21 and a VM 22. The first virtual machine may separately send the storage address to the second virtual machine VM 21 and the second virtual machine VM 22. In FIG. 6, the storage address is represented as add.

In the foregoing data transmission method, in a process from receiving the data by the first virtual machine to accessing the shared memory by the at least two second virtual machines to obtain the data, the first virtual machine can only copy once (that is, store the data in the shared memory) to implement receiving of the data by the at least two second virtual machines. In other words, in the data transmission method provided in embodiments of this application, the multicast data and the broadcast data can be received through copying only performed once, thereby greatly reducing computing resource overheads.

Further, the virtualization system further includes a one-to-many shared queue, and the first virtual machine and the at least two second virtual machines may interact with each other by using the one-to-many shared queue. In a possible embodiment, that the first virtual machine sends the storage address of the data information in the shared memory to the second virtual machine includes: The first virtual machine sends the storage address to the second virtual machine by using the one-to-many shared queue. Correspondingly, the second virtual machine may receive the storage address from the first virtual machine by using the one-to-many shared queue.

In an example, the first virtual machine may sequentially send one piece of notification information to each second virtual machine of the at least two second virtual machines by using the one-to-many shared queue, where the notification information of each second virtual machine may include the storage address and a second virtual machine identifier. Each second virtual machine of the at least two second virtual machines may monitor information sent by the first virtual machine by using the one-to-many shared queue. If the second virtual machine detects that a second virtual machine identifier in notification information is an identifier of the second virtual machine, the second virtual machine may determine that the notification information is sent to the second virtual machine, so that the second virtual machine may receive the notification information.

Further, the first virtual machine further includes at least two virtual network interface cards, and the at least two virtual network interface cards are in a one-to-one correspondence with the at least two second virtual machines, that is, each virtual network interface card of the at least two virtual network interface cards may be used to provide a virtual network interface card service for one second virtual machine of the at least two second virtual machines. For the second virtual machine, one second virtual machine corresponds to one virtual network interface card, which may be understood as that the virtual network interface card is a virtual network interface card of the second virtual machine or the virtual network interface card is a virtual network interface card sensed by the second virtual machine.

The at least two virtual network interface cards may be created by the first virtual machine, and the one-to-many shared queue may also be created by the first virtual machine. The first virtual machine may further bind the at least two virtual network interface cards to the one-to-many shared queue, so that data information received by the at least two virtual network interface cards can be transmitted to the at least two second virtual machines by using the one-to-many shared queue. Optionally, the first virtual machine may create and bind the one-to-many shared queue when creating any virtual network interface card of the at least two virtual network interface cards, and bind another virtual network interface card to the one-to-many shared queue when creating the another virtual network interface card.

In some possible embodiments, when the first virtual machine creates the virtual network interface card for the second virtual machine, the first virtual machine may further create a plurality of one-to-one shared queues, and a quantity of the one-to-one shared queues may be related to a quantity of virtual processors in the second virtual machine. For example, a quantity of the second virtual machines is M, and when creating the virtual network interface card for the second virtual machine, the first virtual machine creates (M-1) one-to-one shared queues and one one-to-many shared queue.

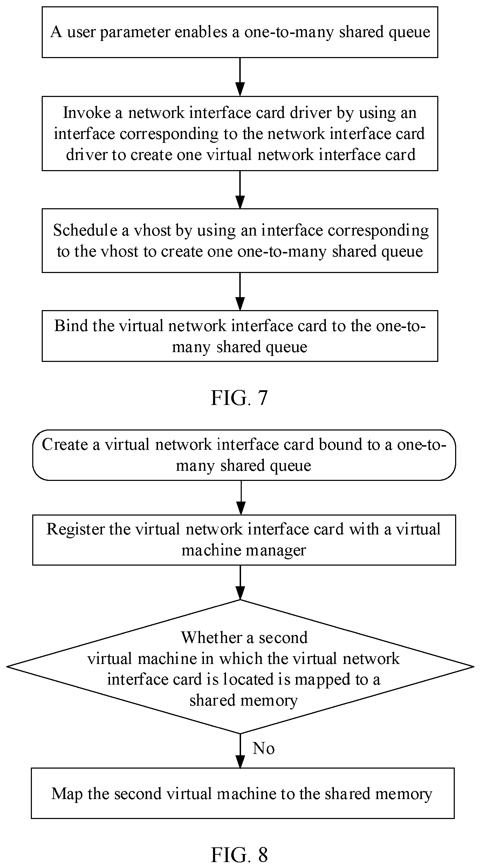

For example, the following is described by using an example in which the first virtual machine creates one virtual network interface card and a one-to-many shared queue, and binds the virtual network interface card to the one-to-many shared queue. Specifically, as shown in FIG. 7, when the first virtual machine creates a virtual network interface card for a second virtual machine, if a user parameter in a virtio user-mode program in the first virtual machine enables a one-to-many shared queue, the virtio user-mode program invokes the network interface card driver by using an interface corresponding to the network interface card driver to create one virtual network interface card, schedules the vhost by using an interface corresponding to the vhost to create one one-to-many shared queue, and binds the virtual network interface card to the one-to-many shared queue.

Further, the virtualization system further includes a virtual machine manager. The virtual machine manager may be a virtual machine monitor VMM or a hypervisor (hypervisor). The virtual machine manager may be configured to: register the virtual network interface card created by the first virtual machine, deregister the virtual network interface card when the first virtual machine deletes the virtual network interface card, create a mapping between the second virtual machine and the shared memory, remove a mapping between the second virtual machine and the shared memory, or the like.

In an example, after the first virtual machine creates, for each second virtual machine, a virtual network interface card bound to the one-to-many shared queue, the first virtual machine may further register the virtual network interface card with the virtual machine manager. For example, as shown in FIG. 8, a virtio kernel service in the first virtual machine may send a registration request to the virtual machine manager, where the registration request is used to register the virtual network interface card. When the virtual machine manager receives the registration request, the virtual machine manager may locally register the virtual network interface card. Further, as shown in FIG. 8, the virtual machine manager may further determine whether the second virtual machine in which the virtual network interface card is located is mapped to the shared memory. If the second virtual machine is not mapped to the shared memory, the virtual machine manager may create a mapping between the second virtual machine and the shared memory, that is, map the second virtual machine to the shared memory, so that the second virtual machine may access the shared memory.

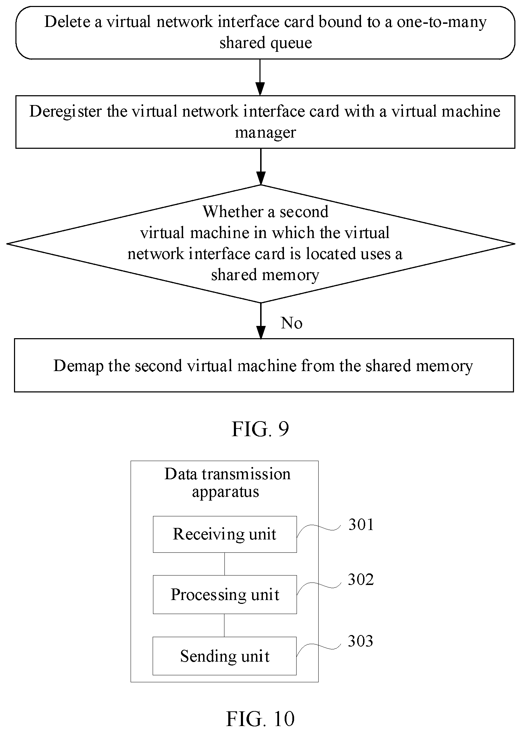

In another example, the first virtual machine may further delete a virtual network interface card that is of each second virtual machine and that is bound to the one-to-many shared queue, and deregister the virtual network interface card from the virtual machine manager. For example, as shown in FIG. 9, the virtio kernel service in the first virtual machine may send a deletion request to the virtual machine manager, where the deletion request is used to delete the virtual network interface card. When the virtual machine manager receives the deletion request, the virtual machine manager may locally deregister the virtual network interface card. Further, the virtual machine manager may further determine whether the second virtual machine in which the virtual network interface card is located uses the shared memory (or referred to as whether a virtual device that uses the shared memory exists in the second virtual machine). If the second virtual machine does not use the shared memory (or referred to as that there is no virtual device using the shared memory in the second virtual machine), the virtual machine manager may delete the mapping between the second virtual machine and the shared memory, that is, demap the second virtual machine from the shared memory, so that the second virtual machine cannot access the shared memory.

In this embodiment of this application, the virtual machine manager may enable, by performing operations of mapping the second virtual machine to the shared memory and demapping the second virtual machine from the shared memory, the plurality of second virtual machines in the virtualization system to flexibly access the same shared memory. In addition, the virtual machine manager maps the at least two second virtual machines to the shared memory, so that the at least two second virtual machines can access the same shared memory, to receive the multicast data or the broadcast data by using the shared memory. In this way, overheads of receiving the multicast data or the broadcast data are reduced. In addition, when determining that a second virtual machine does not use the shared memory, the virtual machine manager may further demap the second virtual machine from the shared memory. In this way, unauthorized access of the second virtual machine to the shared memory can be avoided, thereby ensuring security of receiving the multicast data or the broadcast data.

The foregoing mainly describes the solutions provided in embodiments of this application from a perspective of the virtualization system. It may be understood that, to implement the foregoing functions, the virtualization system includes a hardware structure and/or a software module for performing a corresponding function. A person skilled in the art should easily be aware that, with reference to devices and algorithm steps in the examples described in embodiments disclosed in this specification, this application can be implemented in a form of hardware or a combination of hardware and computer software. Whether a function is performed by hardware or hardware driven by computer software depends on particular applications and design constraints of the technical solutions. A person skilled in the art may use different methods to implement the described functions for each particular application, but it should not be considered that the implementation goes beyond the scope of this application.

In embodiments of this application, the virtualization system may be divided into functional modules based on the foregoing method examples. For example, each functional module corresponding to each function may be obtained through division, or two or more functions may be integrated into one processing module. The integrated module may be implemented in a form of hardware, or may be implemented in a form of software functional module. It should be noted that, in embodiments of this application, module division is an example, and is merely logical function division. During actual implementation, another division manner may be used.

As shown in FIG. 10, embodiments of this application further provide a data transmission apparatus. The apparatus may be applied to a virtualization system as a first virtual machine. The virtualization system further includes a plurality of second virtual machines and a shared memory that is allowed to be accessed by at least two second virtual machines of the plurality of second virtual machines. The apparatus includes a receiving unit 301, a processing unit 302, and a sending unit 303.

The receiving unit 301 is configured to receive data, where the data is data sent to the at least two second virtual machines. The processing unit 302 is configured to: when the data does not exist in the shared memory, store data information of the data in the shared memory, where the data information includes the data. The sending unit 303 is configured to: send a storage address of the data information in the shared memory to any second virtual machine of the at least two second virtual machines.

Optionally, the data is broadcast data; or the data is multicast data. A total quantity of copy times of receiving the data by the at least two second virtual machines is 1.

In a possible embodiment, the sending unit 303 is further configured to: when the data exists in the shared memory, send the storage address of data information in the shared memory to the second virtual machine.

Further, the data information further includes check information of the data, and the processing unit 302 is further configured to: determine the check information of the data; and if the check information already exists in the memory, determine that the data exists in the shared memory; or if the check information does not exist in the memory, determine that the data does not exist in the shared memory.

In a possible embodiment, the virtualization system further includes a one-to-many shared queue, and the sending unit 303 is further configured to send the storage address to the second virtual machine by using the one-to-many shared queue. In another possible embodiment, the first virtual machine further includes a virtual network interface card. Before the first virtual machine receives the data, the processing unit 302 is further configured to bind the virtual network interface card to the one-to-many shared queue. Correspondingly, the receiving unit 301 is further configured to receive the data by using the virtual network interface card.

Further, there are at least two virtual network interface cards, the at least two virtual network interface cards are in a one-to-one correspondence with the at least two second virtual machines, and the virtualization system further includes a virtual machine manager. The sending unit 303 is further configured to: send a registration request to the virtual machine manager, where the registration request is used to register any virtual network interface card of the at least two virtual network interface cards, so that when the virtual machine manager receives the registration request, and if the second virtual machine is not mapped to the shared memory, the virtual machine manager establishes a mapping between the shared memory and any second virtual machine that uses the virtual network interface card.

Further, the sending unit 303 is further configured to send a deletion request to the virtual machine manager, where the deletion request is used to deregister the virtual network interface card, so that when receiving the deletion request, if the second virtual machine on which the virtual network interface card is located does not use the shared memory, the virtual machine manager removes the mapping between the second virtual machine and the shared memory.

It should be noted that all related content of the steps in the foregoing method embodiments may be cited in an embodiment corresponding to the data transmission apparatus. Details are not described herein again in this embodiment of this application.

In this embodiment of this application, when receiving the data sent to the at least two second virtual machines, if the data does not exist in the shared memory, the data transmission apparatus stores the data information of the data in the shared memory, and sends the storage address of the data in the shared memory to the at least two second virtual machines, so that the at least two second virtual machines may access the shared memory to obtain the data. In this process, the data transmission apparatus can only copy once (that is, store the data in the shared memory) to implement receiving of the data by the at least two second virtual machines. That is, in this method, the multicast data and the broadcast data can be received through copying only performed once, thereby greatly reducing computing resource overheads.

In another embodiment of this application, a virtualization system is further provided. A structure of the virtualization system may be shown in FIG. 3 or FIG. 4. The virtualization system includes a first virtual machine and a plurality of second virtual machines, and the first virtual machine includes a shared memory that is allowed to be accessed by at least two second virtual machines of the plurality of second virtual machines.

In this embodiment of this application, the first virtual machine is configured to: receive data, where the data is data sent to the at least two second virtual machines; when the data does not exist in the shared memory, store data information of the data in the shared memory, where the data information includes the data; and send a storage address of the data information in the shared memory to any second virtual machine of the at least two second virtual machines.

The data is broadcast data, or the data is multicast data. In addition, a total quantity of copy times of receiving the data by the at least two second virtual machines is 1.

Optionally, the first virtual machine is further configured to: when the data exists in the shared memory, send the storage address of data information in the shared memory to the second virtual machine.

In a possible embodiment, the data information further includes check information of the data, and the first virtual machine is further configured to: determine the check information of the data; and if the check information already exists in the memory, determine that the data exists in the shared memory; or if the check information does not exist in the memory, determine that the data does not exist in the shared memory.

Optionally, the virtualization system further includes a one-to-many shared queue, and the first virtual machine is further configured to send the storage address to the second virtual machine by using the one-to-many shared queue.

Further, the first virtual machine further includes a virtual network interface card. Before the first virtual machine receives the data, the first virtual machine is further configured to bind the virtual network interface card to the one-to-many shared queue. Correspondingly, the first virtual machine is further configured to receive the data by using the virtual network interface card.

Optionally, there are at least two virtual network interface cards, the at least two virtual network interface cards are in a one-to-one correspondence with the at least two second virtual machines, and the virtualization system further includes a virtual machine manager.

In an implementation, the first virtual machine is further configured to: send a registration request to the virtual machine manager, where the registration request is used to register any virtual network interface card of the at least two virtual network interface cards. Correspondingly, the virtual machine manager is configured to: when receiving the registration request, and if the second virtual machine is not mapped to the shared memory, establish a mapping between the shared memory and any second virtual machine that uses the virtual network interface card.

In another implementation, the first virtual machine is further configured to send a deletion request to the virtual machine manager, where the deletion request is used to deregister the virtual network interface card. Correspondingly, the virtual machine manager is further configured to: when receiving the deletion request, if the second virtual machine on which the virtual network interface card is located does not use the shared memory, remove the mapping between the second virtual machine and the shared memory.

It should be noted that all related content of the steps in the foregoing method embodiments may be cited in an embodiment corresponding to the virtualization system. Details are not described herein again in this embodiment of this application.

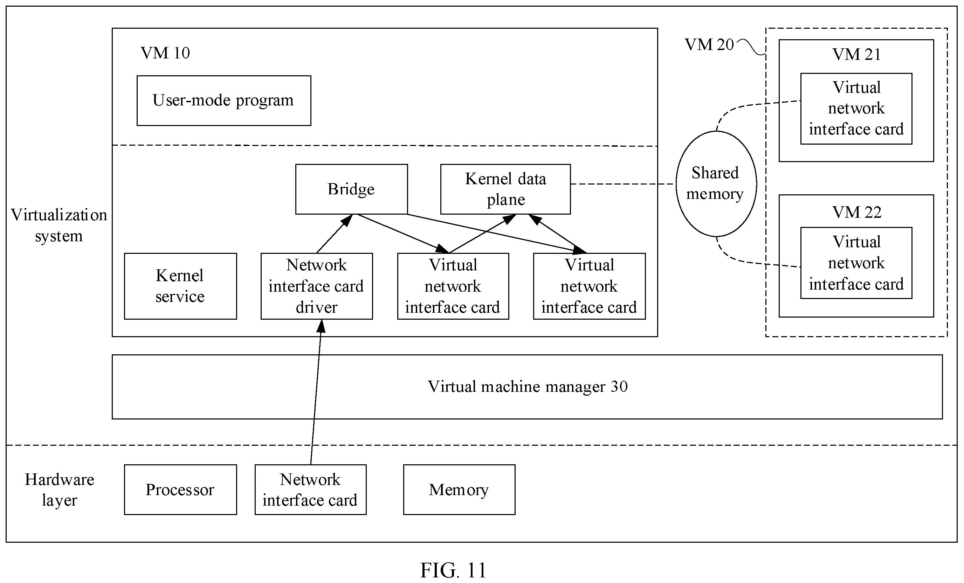

In another embodiment of this application, a communication device is further provided. With reference to FIG. 3, as shown in FIG. 11, the communication device includes a hardware layer and a virtualization system running at the hardware layer. The virtualization system may be the virtualization system provided above. The virtualization system includes a first virtual machine and a plurality of second virtual machines, and the first virtual machine includes a shared memory that is allowed to be accessed by the plurality of second virtual machines. It should be noted that for detailed descriptions of the virtualization system, reference may be made to the foregoing related descriptions. Details are not described herein again in this embodiment of this application. Optionally, the hardware layer may include a plurality of hardware resources such as a processor, a memory, a magnetic disk, a network interface card, and a peripheral. In FIG. 11, an example in which the hardware layer includes a processor, a memory, and a network interface card is used for description.

In still another embodiment of this application, a computer-readable storage medium is further provided. The computer-readable storage medium stores a computer program or instructions. When the computer program or the instructions are run, the data transmission method provided in the foregoing method embodiment is implemented.

In another embodiment of this application, a computer program product is further provided. The computer program product includes a computer program or instructions. When the computer program or the instructions are run, the data transmission method provided in the foregoing method embodiment is implemented.

In the several embodiments provided in this application, it should be understood that the disclosed apparatus, virtualization system and method may be implemented in other manners. For example, the described embodiments of the data transmission apparatus are merely examples. For example, division of the modules or units is merely functional division, and may be other division during actual implementation. For example, a plurality of units or components may be combined or may be integrated into another apparatus, or some features may be ignored or not performed. In addition, the displayed or discussed mutual couplings or direct couplings or communication connections may be implemented through some interfaces. The indirect couplings or communication connections between apparatuses or units may be implemented in electronic, mechanical, or another form.

The units described as separate parts may or may not be physically separate, and parts displayed as units may be one or more physical units, may be located in one place, or may be distributed on different places. Some or all of the units may be selected according to actual requirements to achieve the objectives of the solutions of embodiments.

In conclusion, it should be noted that the foregoing descriptions are merely specific implementations of this application, but are not intended to limit the protection scope of this application. Any variation or replacement within the technical scope disclosed in this application shall fall within the protection scope of this application. Therefore, the protection scope of this application shall be subject to the protection scope of the claims.

## Claims

1. A data transmission method, applied to a virtualization system, wherein the virtualization system comprises a first virtual machine and a plurality of second virtual machines, the first virtual machine comprises a shared memory that is allowed to be accessed by at least two second virtual machines, and the method comprises:
receiving (S201), by the first virtual machine, data, wherein the data is meant to be provided to the at least two second virtual machines;
when the data does not exist in the shared memory, storing (S202), by the first virtual machine, the data in the shared memory; and
sending (S203), by the first virtual machine, a storage address of the data in the shared memory to any second virtual machine of the at least two second virtual machines, so that the second virtual machine is able to access the shared memory based on the storage address to obtain the data stored in the shared memory;
wherein the virtualization system further comprises a one-to-many shared queue, and the sending, by the first virtual machine, a storage address of the data in the shared memory to the second virtual machine comprises: sending, by the first virtual machine, the storage address to the second virtual machine by using the one-to-many shared queue;
wherein the first virtual machine further comprises a virtual network interface card, and before the receiving, by the first virtual machine, data, the method further comprises: binding, by the first virtual machine, the virtual network interface card to the one-to-many shared queue; and correspondingly, the receiving, by the first virtual machine, data comprises receiving, by the first virtual machine, the data by using the virtual network interface card;
wherein there are at least two virtual network interface cards, the at least two virtual network interface cards are in a one-to-one correspondence with the at least two second virtual machines, the virtualization system further comprises a virtual machine manager, and the method further comprises: sending, by the first virtual machine, a registration request to the virtual machine manager, wherein the registration request is used to register any virtual network interface card of the at least two virtual network interface cards; and when the virtual machine manager receives the registration request, if the second virtual machine corresponding to the virtual network interface card is not mapped to the shared memory, establishing, by the virtual machine manager, a mapping between the second virtual machine and the shared memory;
wherein the method further comprises: sending, by the first virtual machine, a deletion request to the virtual machine manager, wherein the deletion request is used to deregister the virtual network interface card; and when the virtual machine manager receives the deletion request, if the second virtual machine corresponding to the virtual network interface card does not use the shared memory, removing, by the virtual machine manager, the mapping between the second virtual machine and the shared memory.

2. The method according to claim 1, wherein a total quantity of copy times of receiving the data by the at least two second virtual machines is 1.

3. The method according to claim 1 or 2, wherein after the receiving, by the first virtual machine, data, the method further comprises:
determining, by the first virtual machine, check information of the data; and
if the check information already exists in the shared memory, determining, by the first virtual machine, that the data exists in the shared memory; or
if the check information does not exist in the shared memory, determining, by the first virtual machine, that the data does not exist in the shared memory.

4. The method according to any one of claims 1 to 3, wherein the data is broadcast data; or the data is multicast data.

5. A virtualization system, wherein the virtualization system comprises a first virtual machine and a plurality of second virtual machines, and the first virtual machine comprises a shared memory that is allowed to be accessed by at least two second virtual machines;
the first virtual machine is configured to receive data, and the data is meant to be provided to the at least two second virtual machines;
the first virtual machine is further configured to: when the data does not exist in the shared memory, store the data in the shared memory; and
the first virtual machine is further configured to: send a storage address of the data in the shared memory to any second virtual machine of the at least two second virtual machines, so that the second virtual machine is able to access the shared memory based on the storage address to obtain the data stored in the shared memory;
wherein the virtualization system further comprises a one-to-many shared queue, and the first virtual machine is further configured to: send the storage address to the second virtual machine by using the one-to-many shared queue;
wherein the first virtual machine further comprises a virtual network interface card, and before the first virtual machine receives the data, the first virtual machine is further configured to: bind the virtual network interface card to the one-to-many shared queue; and correspondingly, the first virtual machine is further configured to receive the data by using the virtual network interface card;
wherein there are at least two virtual network interface cards, the at least two virtual network interface cards are in a one-to-one correspondence with the at least two second virtual machines, and the virtualization system further comprises a virtual machine manager; the first virtual machine is further configured to: send a registration request to the virtual machine manager, wherein the registration request is used to register any virtual network interface card of the at least two virtual network interface cards; and the virtual machine manager is configured to: when receiving the registration request, if the second virtual machine corresponding to the virtual network interface card is not mapped to the shared memory, establish a mapping between the second virtual machine and the shared memory;
the first virtual machine is further configured to send a deletion request to the virtual machine manager, and the deletion request is used to deregister the virtual network interface card; and the virtual machine manager is configured to: when receiving the deletion request, if the second virtual machine corresponding to the virtual network interface card does not use the shared memory, remove the mapping between the second virtual machine and the shared memory.

6. The virtualization system according to claim 5, wherein a total quantity of copy times of receiving the data by the at least two second virtual machines is 1.

7. The virtualization system according to claim 5 or 6, wherein the first virtual machine is further configured to:
determine check information of the data;
if the check information already exists in the shared memory, determine that the data exists in the shared memory; or
if the check information does not exist in the shared memory, determine that the data does not exist in the shared memory.

8. A communication device, wherein the communication device comprises a hardware layer, and the virtualization system that runs at the hardware layer according to any one of claims 5 to 7.

9. A computer-readable storage medium, wherein the computer-readable storage medium stores a computer program or instructions, and when the computer program or the instructions are run, the data transmission method according to any one of claims 1 to 4 is implemented.

## Patentansprüche

1. Datenübertragungsverfahren, angewandt auf ein Virtualisierungssystem, wobei das Virtualisierungssystem eine erste virtuelle Maschine und eine Vielzahl von zweiten virtuellen Maschinen umfasst, wobei die erste virtuelle Maschine einen gemeinsam genutzten Speicher umfasst, auf den durch mindestens zwei zweite virtuelle Maschinen zugegriffen werden darf, und wobei das Verfahren Folgendes umfasst:
Empfangen (S201) von Daten durch die erste virtuelle Maschine, wobei die Daten dazu bestimmt sind, den mindestens zwei zweiten virtuellen Maschinen bereitgestellt zu werden;
wenn die Daten nicht in dem gemeinsam genutzten Speicher vorhanden sind, Speichern (S202) der Daten in dem gemeinsam genutzten Speicher durch die erste virtuelle Maschine; und
Senden (S203) einer Speicheradresse der Daten in dem gemeinsam genutzten Speicher an eine beliebige zweite virtuelle Maschine der mindestens zwei zweiten virtuellen Maschinen durch die erste virtuelle Maschine, so dass die zweite virtuelle Maschine in der Lage ist, basierend auf der Speicheradresse auf den gemeinsam genutzten Speicher zuzugreifen, um die in dem gemeinsam genutzten Speicher gespeicherten Daten zu erhalten;
wobei das Virtualisierungssystem ferner eine gemeinsam genutzte Eins-zu-viele-Warteschlange umfasst und das Senden einer Speicheradresse der Daten in dem gemeinsam genutzten Speicher an die zweite virtuelle Maschine durch die erste virtuelle Maschine Folgendes umfasst: Senden der Speicheradresse an die zweite virtuelle Maschine durch die erste virtuelle Maschine mithilfe der gemeinsam genutzten Eins-zu-viele-Warteschlange;
wobei die erste virtuelle Maschine ferner eine virtuelle Netzwerkschnittstellenkarte umfasst und das Verfahren vor dem Empfangen von Daten durch die erste virtuelle Maschine ferner Folgendes umfasst: Binden der virtuellen Netzwerkschnittstellenkarte an die gemeinsam genutzte Eins-zu-viele-Warteschlange durch die erste virtuelle Maschine; und das Empfangen von Daten durch die erste virtuelle Maschine dementsprechend ein Empfangen von Daten durch die erste virtuelle Maschine mithilfe der virtuellen Netzwerkschnittstellenkarte umfasst;
wobei mindestens zwei virtuelle Netzwerkschnittstellenkarten vorhanden sind, die mindestens zwei virtuellen Netzwerkschnittstellenkarten in einer Eins-zu-Eins-Entsprechung mit den mindestens zwei zweiten virtuellen Maschinen sind, das Virtualisierungssystem ferner einen Manager für virtuelle Maschinen umfasst und das Verfahren ferner Folgendes umfasst:
Senden einer Registrierungsanforderung an den Manager für virtuelle Maschinen durch die erste virtuelle Maschine, wobei die Registrierungsanforderung verwendet wird, um eine beliebige virtuelle Netzwerkschnittstellenkarte der mindestens zwei virtuellen Netzwerkschnittstellenkarten zu registrieren; und,
wenn der Manager für virtuelle Maschinen die Registrierungsanforderung empfängt, falls die zweite virtuelle Maschine, die der virtuellen Netzwerkschnittstellenkarte entspricht, nicht dem gemeinsam genutzten Speicher zugeordnet ist, Einrichten eines Zuordnens zwischen der zweiten virtuellen Maschine und dem gemeinsam genutzten Speicher durch den Manager für virtuelle Maschinen;
wobei das Verfahren ferner Folgendes umfasst: Senden einer Löschanforderung an den Manager für virtuelle Maschinen durch die erste virtuelle Maschine, wobei die Löschanforderung verwendet wird, um die virtuelle Netzwerkschnittstellenkarte abzumelden; und, wenn der Manager für virtuelle Maschinen die Löschanforderung empfängt, falls die zweite virtuelle Maschine, die der virtuellen Netzwerkschnittstellenkarte entspricht, den gemeinsam genutzten Speicher nicht verwendet, Aufheben des Zuordnens zwischen der zweiten virtuellen Maschine und dem gemeinsam genutzten Speicher durch den Manager für virtuelle Maschinen.

2. Verfahren nach Anspruch 1, wobei eine Gesamtzahl von Kopiervorgängen zum Empfangen der Daten durch die mindestens zwei zweiten virtuellen Maschinen 1 ist.

3. Verfahren nach Anspruch 1 oder 2, wobei das Verfahren nach dem Empfangen von Daten durch die erste virtuelle Maschine ferner Folgendes umfasst:
Bestimmen von Prüfinformationen der Daten durch die erste virtuelle Maschine; und
falls die Prüfinformationen bereits in dem gemeinsam genutzten Speicher vorhanden sind, Bestimmen, dass die Daten in dem gemeinsam genutzten Speicher vorhanden sind, durch die erste virtuelle Maschine; oder
falls die Prüfinformationen nicht in dem gemeinsam genutzten Speicher vorhanden sind, Bestimmen, dass die Daten nicht in dem gemeinsam genutzten Speicher vorhanden sind, durch die erste virtuelle Maschine.

4. Verfahren nach einem der Ansprüche 1 bis 3, wobei die Daten Broadcast-Daten sind; oder die Daten Multicast-Daten sind.

5. Virtualisierungssystem, wobei das Virtualisierungssystem eine erste virtuelle Maschine und eine Vielzahl von zweiten virtuellen Maschinen umfasst und die erste virtuelle Maschine einen gemeinsam genutzten Speicher umfasst, auf den durch mindestens zwei zweite virtuelle Maschinen zugegriffen werden darf;
die erste virtuelle Maschine dazu konfiguriert ist, Daten zu empfangen, und die Daten dazu bestimmt sind, den mindestens zwei zweiten virtuellen Maschinen bereitgestellt zu werden;
die erste virtuelle Maschine ferner zu Folgendem konfiguriert ist: wenn die Daten nicht in dem gemeinsam genutzten Speicher vorhanden sind, Speichern der Daten in dem gemeinsam genutzten Speicher; und
die erste virtuelle Maschine ferner zu Folgendem konfiguriert ist: Senden einer Speicheradresse der Daten in dem gemeinsam genutzten Speicher an eine beliebige zweite virtuelle Maschine der mindestens zwei zweiten virtuellen Maschinen, so dass die zweite virtuelle Maschine in der Lage ist, basierend auf der Speicheradresse auf den gemeinsam genutzten Speicher zuzugreifen, um die in dem gemeinsam genutzten Speicher gespeicherten Daten zu erhalten;
wobei das Virtualisierungssystem ferner eine gemeinsam genutzte Eins-zu-viele-Warteschlange umfasst und die erste virtuelle Maschine ferner zu Folgendem konfiguriert ist: Senden der Speicheradresse an die zweite virtuelle Maschine mithilfe der gemeinsam genutzten Eins-zu-viele-Warteschlange;
wobei die erste virtuelle Maschine ferner eine virtuelle Netzwerkschnittstellenkarte umfasst und die erste virtuelle Maschine, bevor die erste virtuelle Maschine die Daten empfängt, ferner zu Folgendem konfiguriert ist: Binden der virtuellen Netzwerkschnittstellenkarte an die gemeinsam genutzte Eins-zu-viele-Warteschlange; und die erste virtuelle Maschine dementsprechend ferner konfiguriert ist, um die Daten mithilfe der virtuellen Netzwerkschnittstellenkarte zu empfangen;
wobei mindestens zwei virtuelle Netzwerkschnittstellenkarten vorhanden sind, die mindestens zwei virtuellen Netzwerkschnittstellenkarten in einer Eins-zu-Eins-Entsprechung mit den mindestens zwei zweiten virtuellen Maschinen sind, das Virtualisierungssystem ferner einen Manager für virtuelle Maschinen umfasst; die erste virtuelle Maschine ferner zu Folgendem konfiguriert ist: Senden einer Registrierungsanforderung an den Manager für virtuelle Maschinen, wobei die Registrierungsanforderung verwendet wird, um eine beliebige virtuelle Netzwerkschnittstellenkarte der mindestens zwei virtuellen Netzwerkschnittstellenkarten zu registrieren; und der Manager für virtuelle Maschinen zu Folgendem konfiguriert ist: wenn er die Registrierungsanforderung empfängt, falls die zweite virtuelle Maschine, die der virtuellen Netzwerkschnittstellenkarte entspricht, nicht dem gemeinsam genutzten Speicher zugeordnet ist, Einrichten eines Zuordnens zwischen der zweiten virtuellen Maschine und dem gemeinsam genutzten Speicher;
die erste virtuelle Maschine ferner dazu konfiguriert ist, eine Löschanforderung an den Manager für virtuelle Maschinen zu senden, und die Löschanforderung verwendet wird, um die virtuelle Netzwerkschnittstellenkarte abzumelden; und der Manager für virtuelle Maschinen zu Folgendem konfiguriert ist: wenn er die Löschanforderung empfängt, falls die zweite virtuelle Maschine, die der virtuellen Netzwerkschnittstellenkarte entspricht, den gemeinsam genutzten Speicher nicht verwendet, Aufheben des Zuordnens zwischen der zweiten virtuellen Maschine und dem gemeinsam genutzten Speicher.

6. Virtualisierungssystem nach Anspruch 5, wobei eine Gesamtzahl von Kopiervorgängen zum Empfangen der Daten durch die mindestens zwei zweiten virtuellen Maschinen 1 ist.

7. Virtualisierungssystem nach Anspruch 5 oder 6, wobei die erste virtuelle Maschine ferner zu Folgendem konfiguriert ist:
Bestimmen von Prüfinformationen der Daten;
falls die Prüfinformationen bereits in dem gemeinsam genutzten Speicher vorhanden sind, Bestimmen, dass die Daten in dem gemeinsam genutzten Speicher vorhanden sind; oder
falls die Prüfinformationen nicht in dem gemeinsam genutzten Speicher vorhanden sind, Bestimmen, dass die Daten nicht in dem gemeinsam genutzten Speicher vorhanden sind.

8. Kommunikationsvorrichtung, wobei die Kommunikationsvorrichtung eine Hardwareschicht und das auf der Hardwareschicht laufende Virtualisierungssystem nach einem der Ansprüche 5 bis 7 umfasst.

9. Computerlesbares Speichermedium, wobei das computerlesbare Speichermedium ein Computerprogramm oder Anweisungen speichert und, wenn das Computerprogramm oder die Anweisungen laufen gelassen werden, das Datenübertragungsverfahren nach einem der Ansprüche 1 bis 4 implementiert wird.

## Revendications

1. Procédé de transmission de données, appliqué à un système de virtualisation, dans lequel le système de virtualisation comprend une première machine virtuelle et une pluralité de secondes machines virtuelles, la première machine virtuelle comprend une mémoire partagée accessible par au moins deux secondes machines virtuelles, et le procédé comprend :
la réception (S201), par la première machine virtuelle, de données, dans lequel les données sont destinées à être fournies aux au moins deux secondes machines virtuelles ;
lorsque les données n'existent pas dans la mémoire partagée, le stockage (S202), par la première machine virtuelle, des données dans la mémoire partagée ; et
l'envoi (S203), par la première machine virtuelle, d'une adresse de stockage des données dans la mémoire partagée à n'importe quelle seconde machine virtuelle parmi les au moins deux secondes machines virtuelles, afin que la seconde machine virtuelle puisse accéder à la mémoire partagée sur la base de l'adresse de stockage pour obtenir les données stockées dans la mémoire partagée ;
dans lequel le système de virtualisation comprend en outre une file d'attente partagée un-à-plusieurs, et l'envoi, par la première machine virtuelle, d'une adresse de stockage des données dans la mémoire partagée à la seconde machine virtuelle comprend : l'envoi, par la première machine virtuelle, de l'adresse de stockage à la seconde machine virtuelle en utilisant la file d'attente partagée un-à-plusieurs ;
dans lequel la première machine virtuelle comprend en outre une carte d'interface réseau virtuelle, et avant la réception, par la première machine virtuelle, de données, le procédé comprend en outre : la liaison, par la première machine virtuelle, de la carte d'interface réseau virtuelle à la file d'attente partagée un-à-plusieurs ; et en conséquence, la réception, par la première machine virtuelle, de données comprend la réception,
par la première machine virtuelle, des données en utilisant la carte d'interface réseau virtuelle ;
dans lequel il existe au moins deux cartes d'interface réseau virtuelles, les au moins deux cartes d'interface réseau virtuelles sont en correspondance biunivoque avec les au moins deux secondes machines virtuelles, le système de virtualisation comprend en outre un gestionnaire de machines virtuelles, et le procédé comprend en outre : l'envoi, par la première machine virtuelle, d'une demande d'enregistrement au gestionnaire de machines virtuelles, dans lequel la demande d'enregistrement est utilisée pour enregistrer toute carte d'interface réseau virtuelle parmi les au moins deux cartes d'interface réseau virtuelles ; et lorsque le gestionnaire de machines virtuelles reçoit la demande d'enregistrement, si la seconde machine virtuelle correspondant à la carte d'interface réseau virtuelle n'est pas mappée à la mémoire partagée, l'établissement, par le gestionnaire de machines virtuelles, d'un mappage entre la seconde machine virtuelle et la mémoire partagée ;
dans lequel le procédé comprend en outre : l'envoi, par la première machine virtuelle, d'une demande de suppression au gestionnaire de machines virtuelles, dans lequel la demande de suppression est utilisée pour désenregistrer la carte d'interface réseau virtuelle ; et lorsque le gestionnaire de machines virtuelles reçoit la demande de suppression, si la seconde machine virtuelle correspondant à la carte d'interface réseau virtuelle n'utilise pas la mémoire partagée, la suppression, par le gestionnaire de machines virtuelles, du mappage entre la seconde machine virtuelle et la mémoire partagée.

2. Procédé selon la revendication 1, dans lequel le nombre total de copies de réception des données par les au moins deux secondes machines virtuelles est de 1.

3. Procédé selon la revendication 1 ou 2, dans lequel, après la réception des données par la première machine virtuelle, le procédé comprend en outre :
la détermination, par la première machine virtuelle, d'informations de contrôle des données ; et
si les informations de contrôle existent déjà dans la mémoire partagée, le fait de déterminer, par la première machine virtuelle, que les données existent dans la mémoire partagée ; ou
si les informations de contrôle n'existent pas dans la mémoire partagée, le fait de déterminer, par la première machine virtuelle, que les données n'existent pas dans la mémoire partagée.

4. Procédé selon l'une quelconque des revendications 1 à 3, dans lequel les données sont des données diffusées ; ou les données sont des données multidiffusées.

5. Système de virtualisation, dans lequel le système de virtualisation comprend une première machine virtuelle et une pluralité de secondes machines virtuelles, et la première machine virtuelle comprend une mémoire partagée accessible par au moins deux secondes machines virtuelles ;
la première machine virtuelle est configurée pour recevoir des données, et les données sont destinées à être fournies aux au moins deux secondes machines virtuelles ;
la première machine virtuelle est en outre configurée pour : lorsque les données n'existent pas dans la mémoire partagée, stocker les données dans la mémoire partagée ; et
la première machine virtuelle est en outre configurée pour : envoyer une adresse de stockage des données dans la mémoire partagée à n'importe quelle seconde machine virtuelle parmi les au moins deux secondes machines virtuelles, afin que la seconde machine virtuelle puisse accéder à la mémoire partagée sur la base de l'adresse de stockage pour obtenir les données stockées dans la mémoire partagée ;
dans lequel le système de virtualisation comprend en outre une file d'attente partagée un-à-plusieurs, et la première machine virtuelle est en outre configurée pour : envoyer l'adresse de stockage à la seconde machine virtuelle en utilisant la file d'attente partagée un-à-plusieurs ;
dans lequel la première machine virtuelle comprend en outre une carte d'interface réseau virtuelle, et avant que la première machine virtuelle ne reçoive les données, la première machine virtuelle est en outre configurée pour : lier la carte d'interface réseau virtuelle à la file d'attente partagée un-à-plusieurs ; et en conséquence, la première machine virtuelle est en outre configurée pour recevoir les données en utilisant la carte d'interface réseau virtuelle ;
dans lequel il existe au moins deux cartes d'interface réseau virtuelles, les au moins deux cartes d'interface réseau virtuelles sont en correspondance biunivoque avec les au moins deux secondes machines virtuelles, et le système de virtualisation comprend en outre un gestionnaire de machines virtuelles ; la première machine virtuelle est en outre configurée pour : envoyer une demande d'enregistrement au gestionnaire de machines virtuelles, dans lequel la demande d'enregistrement est utilisée pour enregistrer toute carte d'interface réseau virtuelle parmi les au moins deux cartes d'interface réseau virtuelles ; et le gestionnaire de machines virtuelles est configuré pour : lors de la réception de la demande d'enregistrement, si la seconde machine virtuelle correspondant à la carte d'interface réseau virtuelle n'est pas mappée à la mémoire partagée, établir un mappage entre la seconde machine virtuelle et la mémoire partagée ;
la première machine virtuelle est en outre configurée pour envoyer une demande de suppression au gestionnaire de machines virtuelles, et la demande de suppression est utilisée pour désenregistrer la carte d'interface réseau virtuelle ; et le gestionnaire de machines virtuelles est configuré pour : lors de la réception de la demande de suppression, si la seconde machine virtuelle correspondant à la carte d'interface réseau virtuelle n'utilise pas la mémoire partagée, supprimer le mappage entre la seconde machine virtuelle et la mémoire partagée.

6. Système de virtualisation selon la revendication 5, dans lequel le nombre total de copies de réception des données par les au moins deux secondes machines virtuelles est de 1.

7. Système de virtualisation selon la revendication 5 ou 6, dans lequel la première machine virtuelle est en outre configurée pour :
déterminer des informations de contrôle des données ;
si les informations de contrôle existent déjà dans la mémoire partagée, déterminer que les données existent dans la mémoire partagée ; ou
si les informations de contrôle n'existent pas dans la mémoire partagée, déterminer que les données n'existent pas dans la mémoire partagée.

8. Dispositif de communication, dans lequel dispositif de communication comprend une couche matérielle et le système de virtualisation qui s'exécute au niveau de la couche matérielle selon l'une quelconque des revendications 5 à 7.

9. Support de stockage lisible par ordinateur, dans lequel le support de stockage lisible par ordinateur stocke un programme informatique ou des instructions, et lorsque le programme informatique ou les instructions sont exécutés, le procédé de transmission de données selon l'une quelconque des revendications 1 à 4 est mis en œuvre.
